# FASCICULE DE BREVET EUROPEEN

(11) **EP 0 660 478 B1**
(45) Date de publication et mention de la délivrance du brevet: **27.05.1998**
(21) Numéro de dépôt: 94402901.6
(22) Date de dépôt: 16.12.1994
(51) Int. Cl.: H02G 5/06

(54) **Ligne à haute tension à isolation gazeuse pour longue distance**
Gasisolierte Hochspannungsleitung für lange Abstände
High voltage gas-insulated power line for long distances

(30) Priorité: 21.12.1993 FR 9315355
(43) Date de publication de la demande: 28.06.1995
(73) Titulaire: GEC ALSTHOM T ET D SA, 75016 Paris (FR)
(72) Inventeur: Thuries, Edmond, F-69330 Meyzieu (FR); Pham, Van Doan, F-69330 Meyzieu (FR); Tixier, René, F-69008 Lyon (FR); Guillen, Marcel, F-38780 Pont-Eveque (FR)
(74) Mandataire: Fournier, Michel

(56) Documents cités:
- EP-A- 0 423 665
- EP-A- 0 573 338
- DE-A- 2 316 100
- DE-A- 3 141 437
- FR-A- 2 132 646
- US-A- 3 730 968
- US-A- 3 767 837

## Description

La présente invention concerne le transport de l'éléctricité par ligne à haute tension, supérieure ou égale à 225 kV, à isolation gazeuse, ladite ligne comprenant une enveloppe métallique étanche à l'intérieur de laquelle sont placés des conducteurs, l'isolement étant assuré par un gaz.

Le document DE-A-2 316 100 décrit une ligne triphasée comprenant une enveloppe cylindrique en acier et trois conducteurs disposés parallèlement à l'axe de ladite enveloppe et maintenus par une pluralité d'ensembles de trois bras isolants solidaires les uns des autres.

On sait que le matériau utilisé pour réaliser l'enveloppe doit être l'acier, préféré à l'aluminium, car l'acier a une meilleure tenue à l'arc interne et une meilleure résistance à la pression interne, en particulier lorsque le gaz isolant est l'azote sous une pression d'une dizaine d'hectopascals. En outre, l'acier est moins cher, plus facile à protéger contre la corrosion et plus facile à souder sur le site d'installation de la ligne.

Si on utilise une enveloppe en acier pour le transport du courant alternatif, elle est le siège de pertes thermiques dues au courant induit dans l'acier. Il est alors nécessaire d'insérer, entre les conducteurs et l'enveloppe, un écran magnétique qui peut être avantageusement une enveloppe en aluminium. On pourra se référer à cet égard à l'article "Particle traps in gas-insulated systems" de R.W. Afzelius et al., Gaseous dielectrics, Tome II, Pergamon Press.

La plupart des câbles à isolation gazeuse par l'hexafluorure de soufre (SF6) sont constitués d'une enveloppe en aluminium, réalisés en tronçons de 10 mètres de longueur environ et boulonnés à chaque extrémité, l'étanchéité étant assurée par des joints (Voir par exemple Electra n°94, 1984). Les conducteurs intérieurs sont également des tronçons de 10 mètres environ reliés électriquement les uns aux autres par des contacts glissants.

L'utilisation des brides et joints à chaque jonction de tronçon n'est pas économique, surtout pour des lignes à grande distance; les risques de fuite de gaz sont accrus.

Sur une ligne de grande longueur, la multiplicité des contacts glissants entraîne une valeur relativement élevée de la valeur globale des résistances de contact, ce qui entraîne des échauffements qui peuvent être prohibitifs, surtout dans le cas de lignes enterrées.

C'est pourquoi le Demandeur estime que la solution la plus économique pour réaliser une ligne à haute tension de grande longueur à isolation gazeuse est de souder les tronçons d'enveloppe et les tronçons de conducteur. La soudure entraîne l'apparition de copeaux métalliques et des solutions doivent être trouvées pour les éliminer ou réduire leurs effets.

Un but de la présente invention est de définir une ligne électrique, pouvant être de grande longueur (plusieurs kilomètres à plusieurs dizaines de kilomètres), à isolation gazeuse, réalisée par soudage de tronçons d'enveloppes et de conducteurs, dont le coût de fabrication et de mise en place est modéré, dont le coût d'exploitation est faible grâce à des pertes Joule réduites, et dont la sûreté de fonctionnement est grande.

L'invention a pour objet une ligne électrique triphasée à haute tension à isolation gazeuse comprenant une enveloppe cylindrique en acier et trois conducteurs disposés parallèlement à l'axe de ladite enveloppe, les conducteurs étant maintenus par une pluralité d'ensembles de trois bras isolants solidaires les uns des autres, caractérisé en ce qu'elle comprend un écran magnetique, constitué d'une enveloppe cylindrique en aluminium, placé à l'intérieur de ladite enveloppe en acier, et situé tout près de cette dernière, lesdits conducteurs pouvant coulisser librement à l'intérieur d'ouvertures pratiquées dans lesdits bras, l'enveloppe en aluminium étant séparée de l'enveloppe en acier par des bandes en matière plastique ou polymère chargé à faible coefficient de frottement.

Selon un mode de réalisation, le matériau desdites bande est le polytétrafluoro-éthylène, connu commercialement sous la marque "Téflon".

Selon une caractéristique de l'invention, les extrémités desdits bras sont enserrées deux à deux par les extrémités d'arceaux métalliques, lesdites extrémités étant boulonnées.

Les extrémités des arceaux forment un triangle équilatéral renversé à base en haut et horizontale.

L'enveloppe d'acier est constituée d'éléments d'enveloppe de longueur comprise entre 5 et 12 mètres et soudés deux à deux.

L'enveloppe d'aluminium est constituée d'éléments d'enveloppe soudés chacun aux arceaux de maintien d'un même ensemble de bras.

Les conducteurs sont constitués d'éléments de conducteurs soudés deux à deux.

Les bras sont munis d'une chemise munie d'une gorge délimitant deux surfaces d'appui sur deux conducteurs adjacents, la soudure des conducteurs se trouvant à l'intérieur de ladite gorge.

La chemise métallique des bras isolants est munie de joints de part et d'autre de la gorge et d'un contact électrique.

Les arceaux se trouvent près de la soudure des enveloppes en acier.

Selon une autre caractéristique de l'invention, la ligne électrique est réalisée en compartiments montés en usine, chaque compartiment comprenant un élément d'enveloppe en acier de longueur comprise entre 5 et 12 mètres, un élément d'enveloppe en aluminium de longueur égale à l'enveloppe d'acier, trois éléments de conducteur de longueur égale à celle desdites enveloppes et un ensemble de bras supports et d'arceaux auquel est solidarisée une extrémité de ladite enveloppe en aluminium.

Plusieurs compartiments sont solidarisés pour former un tronçon, l'extrémité du tronçon étant munie de moyens de remplissage et de vidange du gaz, de moyens d'étanchéité du tronçon, de moyens pour assurer la libre dilatation des conducteurs et des enveloppes, et de moyens de désassemblage des deux tronçons ajacents.

L'invention sera bien comprise à la lecture de la descrition donnée ci-après d'un mode préféré de réalisation, en référence au dessin annexé dans lequel:
- la figure 1 est une vue en coupe transversale d'une ligne selon l'invention,
- la figure 2 est une vue en coupe axiale d'une portion de ligne selon l'invention.
- la figure 3 est une vue partielle à plus grande échelle d'un bras support de conducteur,
- la figure 4 est une section transversale d'une ligne selon l'invention,
- la figure 5 est une vue en plan d'une grille utilisée dans une ligne selon l'invention,
- les figures 6A à 6D illustrent un premier mode de réalisation d'une ligne selon l'invention,
- les figures 7A à 7E illustrent une variante de réalisation d'une ligne selon l'invention,
- les figures 8A et 8B représentent en coupe axiales les extrémités de deux tronçons de ligne, respectivement en position assemblée et en position désassemblée.

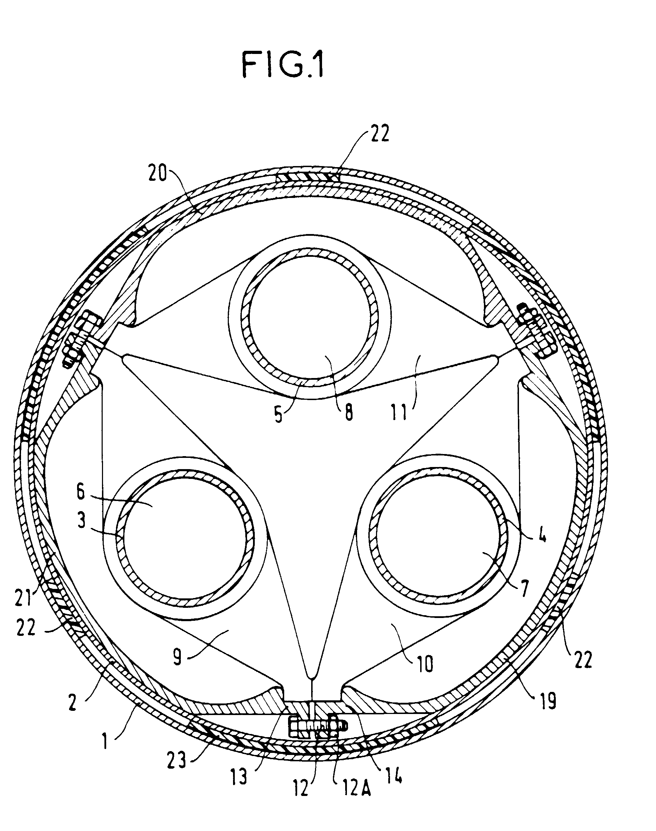

Dans la figure 1, les référence 3, 4 et 5 désignent trois conducteurs sous forme de tubes d'aluminium ou de cuivre, disposés parallèlement entre eux et logés respectivement dans les ouvertures 6, 7 et 8 de bras isolants 9, 10 et 11. Les extrémités des bras sont maintenues serrées deux à deux dans des mâchoires telles que 13 et 14 constituant les extrémités d'arceaux métalliques 19, 20 et 21; les mâchoires sont serrées par des vis 12 et écrous 12A. Les extrémités des arceaux forment un triangle équilatéral renversé à base en haut et horizontale.

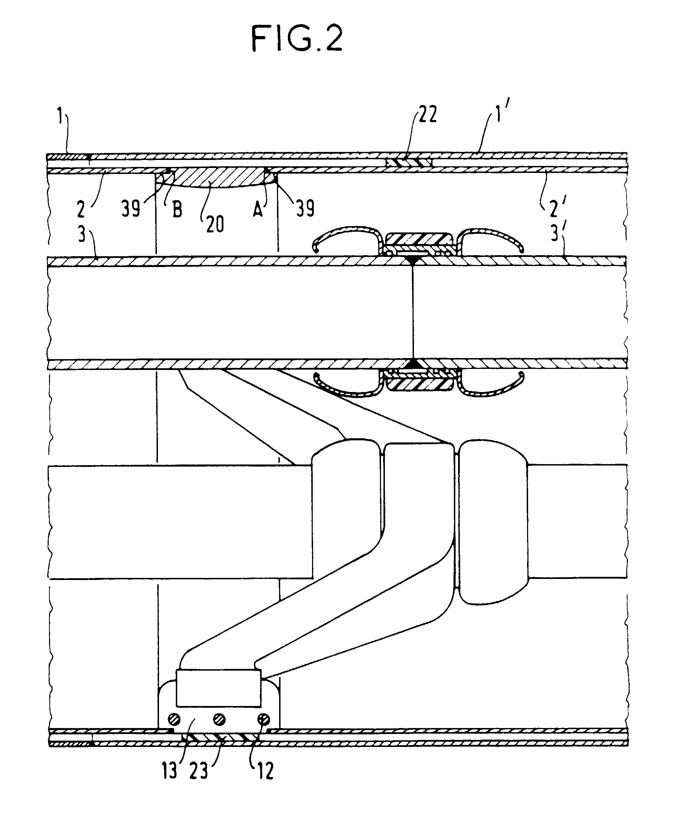

L'ensemble des organes supports des conducteurs forme ainsi un ensemble compact (voir également Fig.2). Ces enveloppes en aluminium coulissent, à l'intérieur d'une enveloppe 1 en acier, sur des bandes 22 en matériau plastique ou en polymère chargé, à bas coefficient de frottement et à dureté suffisante, tel que le polytétrafluoroéthylène connu sous la marque déposée Téflon.

Les enveloppes d'aluminium forment, vis-à-vis de l'enveloppe 1 en acier, un écran magnétique permettant de réduire l'échauffement dans l'enveloppe en acier.

Les bandes en téflon permettent aux enveloppes d'aluminium de glisser sur l'enveloppe en acier 1, en cas de dilatations différentes au cours du fonctionnement, et également lors du montage de la ligne.

Eventuellement, d'autres bandes de "Téflon", telle que 23, placées au droit des extrémités des bras, permettent de centrer l'enveloppe d'aluminium 2 par rapport à l'enveloppe d'acier 1.

On donne aux arceaux 19, 20, 21 des profils arrondis pour assurer une bonne tenue diélectrique par rapport aux conducteurs.

Les enveloppes d'aluminium sont constitués d'éléments de tubes cylindriques tels que 2 et 2' (Fig.2) dont les extrémités A et B sont emboîtées dans des gorges 39 des arceaux 19, 20, 21, puis soudés à ces arceaux. Cette disposition permet d'éviter, lors de la soudure, l'injection de particules métalliques dans l'espace intérieur à l'enveloppe 2. Par contre, l'injection de particules lors de la soudure des enveloppes d'acier 1, 1' dans l'espace entre les enveloppes 1 et 2 ou dans l'espace entre les enveloppes 1' et 2' n'est pas gênant, les enveloppes d'acier et d'aluminium étant pratiquement au même potentiel, celui de la masse.

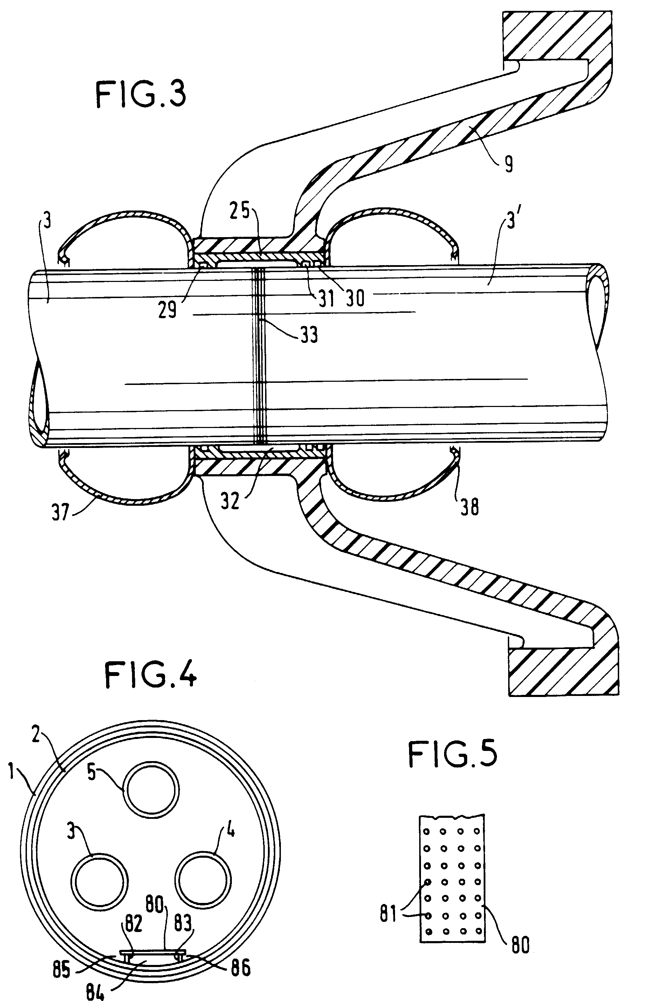

La figure 3 montre que les ouvertures des bras supports des conducteurs, tel que le bras 9, sont pourvues intérieurement d'une chemise métallique 25 solidarisée au bras correspondant.

La chemise 25 comprend une gorge 32 délimitant deux surfaces d'appui munies de joints 29, 30 coopérant respectivement avec deux éléments adjacents 3 et 3' de conducteur; la gorge 32 entre les surfaces d'appui permet d'emprisonner les poussières provenant du frottement des pièces pendant leur dilatation thermique.

Un contact électrique 31 disposé dans la chemise 25 assure le contact électrique entre le conducteur 3' et la chemise 25.

Les éléments 3 et 3' de conducteur sont soudés le long d'un cercle 33. La soudure est cachée dans la gorge 32 pour assurer une meilleure tenue diélectrique.

Des anneaux anti-corona 37, 38 sont fixés ou soudés à la chemise 25 et permettent d'en réduire les contraintes diélectriques.

Les mâchoires 13, 14 et les fixations 12-12A se trouvent sur un axe vertical de la ligne, c'est-à-dire dans la partie inférieure de l'enveloppe (Fig. 1). Ceci permet aux poussières et aux particules métalliques de rester dans une zone à faible champ électrique. On évite ainsi l'attraction forte de ces particules par les conducteurs 3 et 4.

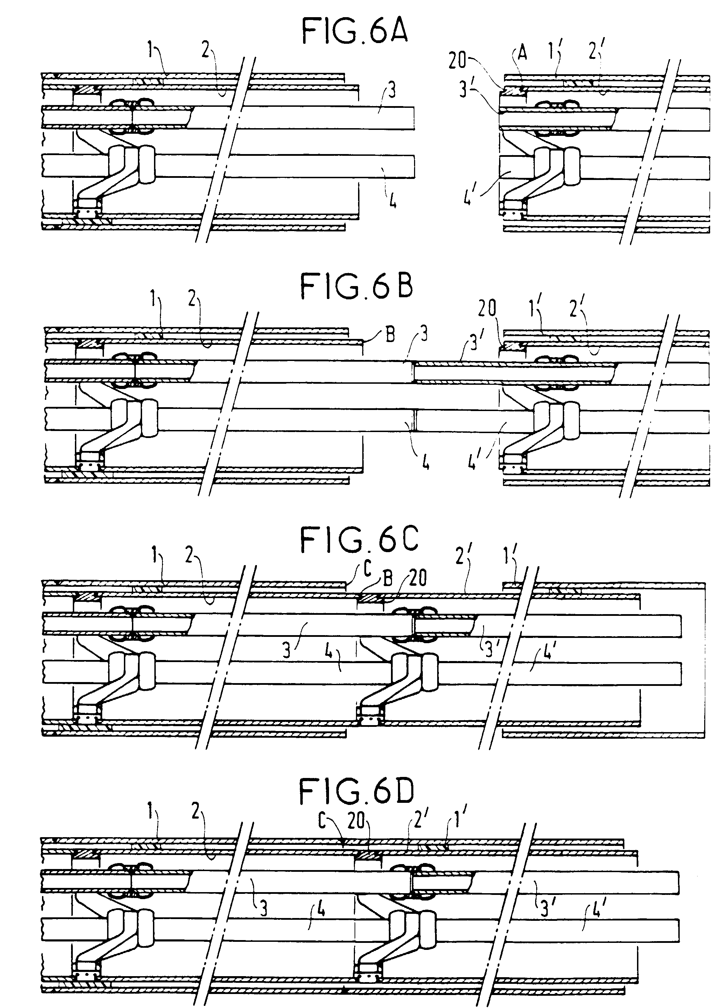

Pour piéger les particules, on peut utiliser une trappe formée d'une plaque métallique 80 (Fig. 5) munie de trous 81 et posée sur la partie basse de l'enveloppe 2, entre deux lignes d'arceaux.

La plaque 80 est soutenue par des pieds 82, 83 (Fig. 4).

Les particules métalliques libres tombent dans l'espace 84 par les trous 81 ou les fentes latérales 85 et 86.

On peut utiliser l'espace 84 sous la plaque 80 pour y loger des fibres optiques utilisées comme capteurs ou comme supports de transmission des informations le long de la ligne triphasée.

Les constituants de la ligne, à savoir conducteurs, enveloppe d'aluminium et enveloppe d'acier sont fabriqués en éléments de longueur comprise entre 5 et 12 mètres, de préférence 10 mètres. Les constituants sont soudés bout à bout pour réaliser un tronçon de ligne d'une longueur comprise entre 50 et 150 mètres, préférentiellement 100 mètres; les extrémités du tronçon de ligne sont munis de constituants particuliers pour assurer l'étanchéité du tronçon de ligne vis-à-vis du tronçon adjacent et résoudre les problèmes liés à la dilatation des constituants.

Les figures 6A à 6D illustrent un premier mode de réalisation dans lequel on préassemble, de préférence en usine, des compartiments comprenant chacun, comme le montre la figure 6A, un élément d'enveloppe en acier (1, 1'), un élément d'enveloppe en aluminium (2, 2'), des éléments de conducteur (3, 3'; 4, 4'; les troisièmes conducteurs ne sont pas visibles dans la figure), les conducteurs étant soutenus par les bras tels que 10, 10' 11, 11', etc.., et pouvant glisser par rapport à ces bras. Les bras sont solidaires des arceaux 20, 20' etc. L'enveloppe d'aluminium 2' du compartiment de droite est soudée en A aux arceaux.

Les compartiments sont alignés l'un par rapport à l'autre, le compartiment de gauche étant agencé pour que les conducteurs 3, 4 dépassent hors de l'enveloppe d'aluminium 2 et que cette dernière dépasse hors de l'enveloppe acier 1. Au début du processus d'assemblage des deux compartiments adjacents, les extrémités des enveloppes (1', 2') et des conducteurs (3', 4') du compartiment de droite sont alignés.

On tire les conducteurs 3', 4', etc. du compartiment de droite pour les amener en contact avec les conducteurs homologues du compartiment de gauche et on les soude (Figure 6B).

On tire ensuite l'enveloppe d'aluminium 2', solidaire du groupe de bras 10', 11', etc.. et on l'amène au contact avec l'enveloppe d'aluminium 2 du compartiment de gauche. L'enveloppe 2' glisse aisément à l'intérieur de l'enveloppe d'acier 1', grâce aux bandes de "téflon". On soude l'enveloppe 2 en B aux arceaux (Figure 6C).

On tire enfin (Figure 6D) l'enveloppe d'acier 2' du compartiment de droite pour l'anmener en contact avec l'enveloppe d'acier 2 du compartiment de gauche, et on soude les deux enveloppes l'une à l'autre.

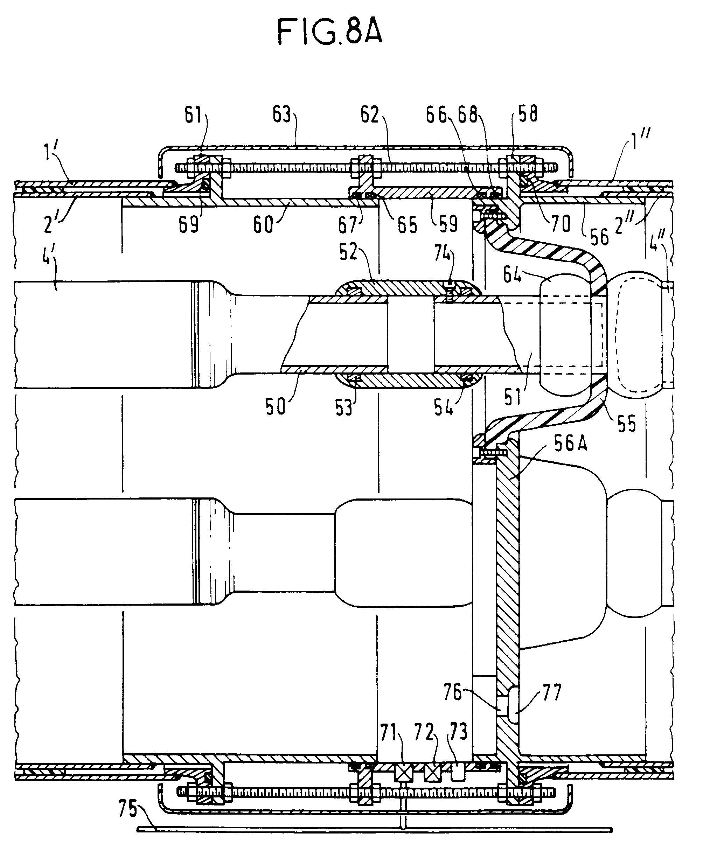

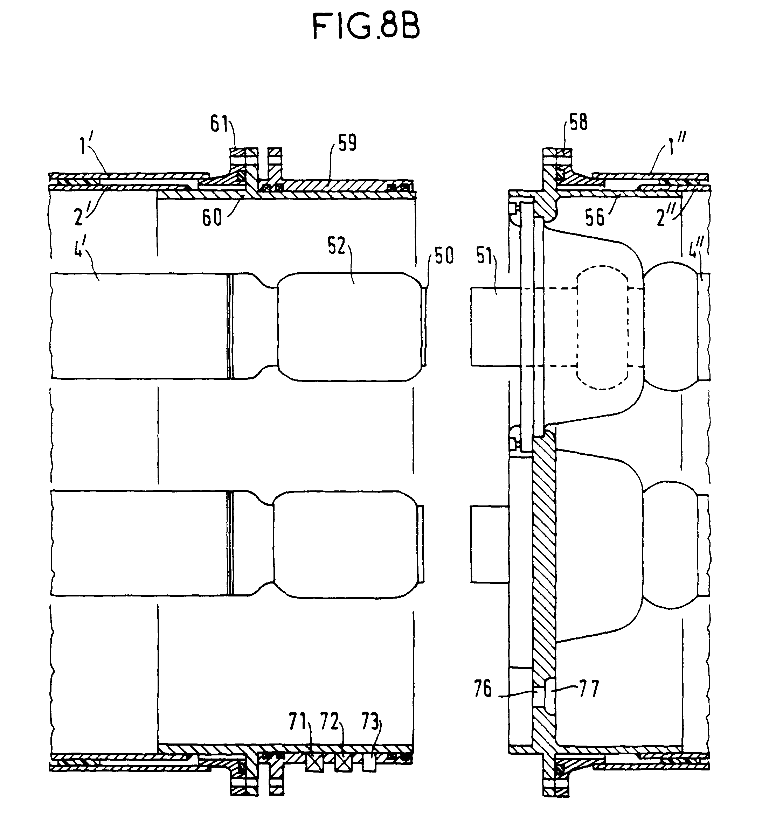

L'opération est répétée jusqu'à obtention d'un tronçon de ligne (de longueur comprise entre 50 et 120 mètres), dont l'extrémité est équipé de pièces particulières, comme il sera décrit plus loin en référence aux figures 8A et 8B.

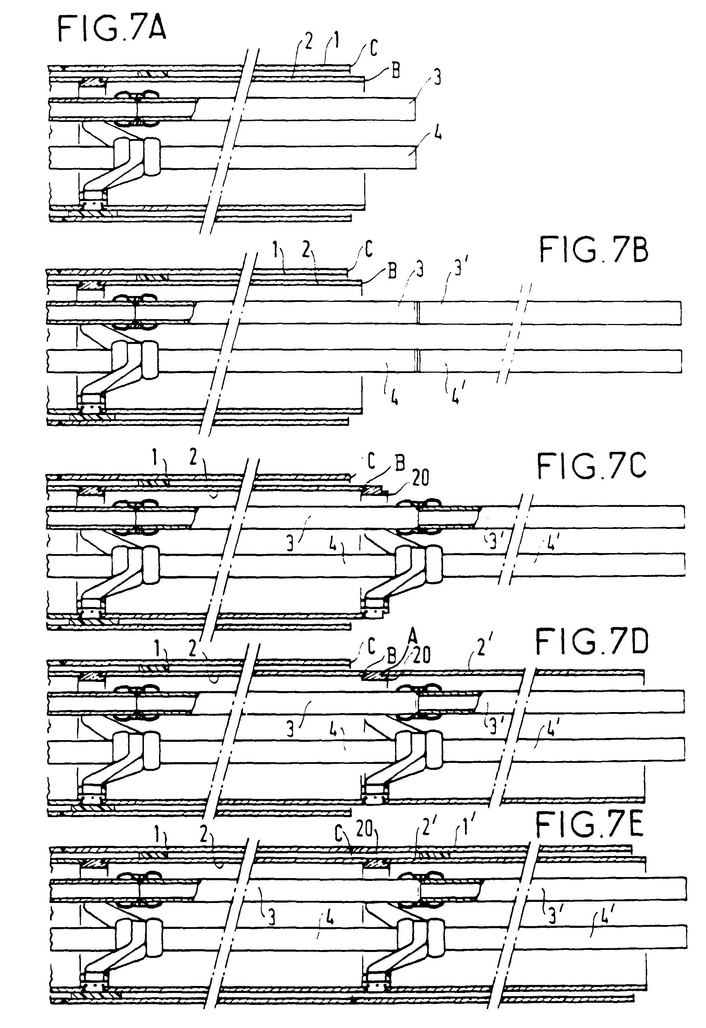

Une variante de montage de la ligne est décrite en référence aux figures 7A à 7E.

Un compartiment assemblé est représenté dans la partie gauche de la figure 7A. Il comprend comme précédemment une enveloppe en acier 1, une enveloppe en aluminium 2 dépassant de l'extrémité de l'enveloppe d'acier, et des conducteurs 3, 4, etc. soutenus à gauche par des bras et éventuellement par des supports provisoires amovibles non représentés. Les conducteurs dépassent de l'extrémité de l'enveloppe d'aluminium 2.

Des conducteurs 3', 4', etc. sont approchés et soudés respectivement aux conducteurs 3, 4, etc.. (Figure 7B).

Un bloc constitué par des bras 10, 11, etc.. avec arceaux est enfilé sur les conducteurs 3', 4', etc... et amené en contact avec l'extrémité B de l'enveloppe d'aluminium 2; l'enveloppe 2 est soudée en B aux arceaux (Figure 7C).

Une enveloppe d'aluminium 2' est engagée autour des conducteurs 3', 4', etc... et son extrémité A est amenée en contact avec les arceaux auxquels elle est soudée ((Figure 7D).

Enfin, une enveloppe d'acier 1' est engagée autour de l'enveloppe d'aluminium 2', avec interposition de manchons de "téflon" et amenée au contact, en C, avec l'enveloppe d'acier 1 à laquelle elle est soudée.

L'opération est répétée jusqu'à obtention d'un tronçon qui est équipé de pièces d'extrémités particulières, permettant la dilatation des conducteurs, le desassemblage de deux tronçons de ligne adjacents et l'étanchéité individuelle des tronçons de ligne. On se référera aux figures 8A et 8B.

Dans ces figures, les références 1', 2', 3', 4' désignent respectivement l'enveloppe d'acier, l'enveloppe d'aluminium et les conducteurs du tronçon de ligne électrique à la gauche de la figure, (partie gauche de la figure), les références 1'', 2'', 3'', 4'' désignant les éléments homologues du tronçon adjacent (partie droite de la figure).

La figure 8A montre le tronçon de gauche raccordé au tronçon de droite en fonctionnement normal. On voit que les conducteurs, tel que 4' et 4'', sont munis de portions d'extrémité soudées et de section rétrécie respectivement 50 et 51, et que ces portions sont reliées par un manchon de contact 52 muni de contacts glissants 53 et 54. Les conducteurs peuvent ainsi se dilater librement sans subir de déformations latérales. Le manchon 52 peut être fixé à la portion d'extrémité 51 par une vis de blocage 74.

A l'enveloppe d'acier 1' est soudée une bride 61 à laquelle s'appuie un cylindre métallique 60 s'engageant dans l'enveloppe d'aluminium 2' et soudée à celle-ci.

De même, à l'enveloppe d'acier 1'' est soudée une bride 58 à laquelle s'appuie un cylindre métallique 56 s'engageant dans l'enveloppe cylindrique 2'', mais cette fois le cylindre 56 et l'enveloppe 2'' glissent l'un par rapport à l'autre pour permettre le jeu des dilatations. Le cylindre 56 est solidaire d'une plaque transversale 56A munie de trois ouvertures sur les bords desquelles s'appuient des cônes isolants tel que le cône 55 servant de supports aux conducteurs 4''. La plaque transversale assure l'étanchéité du tronçon de droite de la figure lorsque ce dernier est séparé du tronçon de ligne de la gauche de la figure.

Les cylindres 60 et 56 sont munis respectivement de contacts glissants 65 et 66 coopérant avec un cylindre conducteur 59. L'étanchéité est assurée par des joints 67, 68, 69 et 70.

Les cylindres 56, 60 et 59 sont maintenus par des tiges filetés passant dans des brides appropriées; un couvercle 63 protège l'ensemble du dispositif.

Des vannes ou électrovannes 71 de remplissage de gaz isolant, de vidange 72, des capteurs de pression et de détection d'arc interne 73 peuvent être installés sur le cylindre 59.

L'alimentation en gaz est assurée soit par une canalisation 75 longeant à l'extérieur les enveloppes en acier, soit en cascade par l'intermédiaire des ouvertures 76 à travers les filtres 77.

Le démontage s'effectue de la façon suivante: on enlève le couvercle 63, on ferme l'alimentation en gaz, on vide le gaz par la vanne 72, les conducteurs n'étant plus sous tension.

On enlève ensuite les tiges filetées 62 et on déplace le cylindre 59 par glissement vers la gauche (Figure 8B).

On fait glisser vers la gauche le manchon de contact 52, après avoir dévissé la vis de blocage 74. On fait de même pour les deux autres phases.

Le tronçon de ligne de gauche est alors complètement déconnecté du tronçon de droite.

On notera que l'enveloppe d'aluminium peut être épaisse (10 mm environ) et être, en cas de court-circuit, traversée sans danger par le courant de court-circuit qui s'évacue à la terre par le cylindre 56, la bride 58 et le tube d'acier 1''. Pour réaliser une économie notable dans la réalisation de la ligne, on peut utiliser une enveloppe d'aluminium plus mince, par exemple d'une épaisseur de 4 mm environ. Il faudra alors isoler, par une couche d'isolant non représentée dans la figure 8A, l'enveloppe 2'' du cylindre 56; le courant de court-circuit percera l'enveloppe d'aluminium et s'évacura directement à travers l'enveloppe d'acier, sans traverser l'enveloppe d'aluminium qui ne risquera pas de s'échauffer et même de fondre.

## Revendications

1. Ligne électrique triphasée à haute tension à isolation gazeuse comprenant une enveloppe cylindrique en acier (1) et trois conducteurs (3,4,5) disposés parallèlement à l'axe de ladite enveloppe, les conducteurs (3, 4, 5) étant maintenus par une pluralité d'ensembles de trois bras isolants (9, 10, 11) solidaires les uns des autres, caractérisé en ce qu'elle comprend un écran magnétique (2), constitué d'une enveloppe cylindrique en aluminium, placé à l'intérieur de ladite enveloppe en acier, et situé très près de cette dernière, lesdits conducteurs pouvant coulisser librement à l'intérieur d'ouvertures pratiquées dans lesdits bras, l'enveloppe en aluminium (2) étant séparée de l'enveloppe en acier (1) par des bandes (22) en matière plastique ou polymère chargé à faible coefficient de frottement.

2. Ligne électrique selon la revendication 1, caractérisé en ce que le matériau desdites bandes (22) est le polytétrafluoro-éthylène, connu commercialement sous la marque "Téflon".

3. Ligne électrique selon l'une des revendications 1 et 2, caractérisé en ce que les extrémités desdits bras (9, 10, 11) sont enserrées deux à deux par les extrémités d'arceaux métalliques (19, 20, 21), lesdites extrémités étant boulonnées.

4. Ligne électrique selon la revendication 3, caractérisée en ce que les extrémités des arceaux (19, 20, 21) forment un triangle équilatéral renversé à base en haut et horizontale.

5. Ligne électrique selon l'une des revendications 1 à 4, caractérisé en ce que l'enveloppe d'acier est constituée d'éléments d'enveloppe (1, 1') de longueur comprise entre 5 et 12 mètres et soudés deux à deux.

6. Ligne électrique selon l'une des revendications 1 à 5, caractérisée en ce que l'enveloppe d'aluminium est constituée d'éléments d'enveloppe (2, 2') soudés chacun aux arceaux (19, 20 ,21) de maintien d'un même ensemble de bras.

7. Ligne électrique selon l'une des revendications 1 à 6, caractérisée en ce que les conducteurs sont constitués d'éléments de conducteurs (3, 3'; 4, 4') soudés deux à deux.

8. Ligne électrique selon la revendication 7, caractérisée en ce que les bras (9) sont munis d'une chemise (25) munie d'une gorge (32) délimitant deux surfaces d'appui sur deux conducteurs (3, 3') adjacents, la soudure (33) des conducteurs (3, 3') se trouvant à l'intérieur de ladite gorge (32).

9. Ligne électrique selon la revendication 8, carctérisée en ce que la chemise métallique (25) des bras isolants (9, 10, 11) est munie de joints (29, 30) de part et d'autre de la gorge (32) et d'un contact électrique (31).

10. Ligne électrique selon la revendication 8, caractérisée en ce que les arceaux (19, 20, 21) se trouvent près de la soudure des enveloppes en acier (1, 1').

11. Ligne électrique selon l'une des revendications 1 à 9, caractérisée en ce qu'elle est réalisée en compartiments montés en usine, chaque compartiment comprenant un élément (1) d'enveloppe en acier de longueur comprise entre 5 et 12 mètres, un élément (2) d'enveloppe en aluminium de longueur égale à l'enveloppe d'acier, trois éléments de conducteur (3, 4, 5) de longueur égale à celle desdites enveloppes et un ensemble de bras supports (9, 10, 11) et d'arceaux (19, 20, 21) auquel est solidarisée une extrémité de ladite enveloppe en aluminium.

12. Ligne électrique selon la revendication 11, caractérisée en ce que plusieurs compartiments sont solidarisés pour former un tronçon, l'extrémité du tronçon étant munie de moyens de remplissage et de vidange du gaz, de moyens d'étanchéité du tronçon, de moyens pour assurer la libre dilatation des conducteurs et des enveloppes, et de moyens de désassemblage des deux tronçons ajacents.

## Patentansprüche

1. Gasisolierte, dreiphasige elektrische Hochspannungsleitung, die einen zylindrischen Mantel (1) aus Stahl und drei Leiter (3, 4, 5) umfaßt, die parallel zur Achse des Mantels angeordnet sind, wobei die Leiter (3, 4, 5) von einer Vielzahl von Aufbauten von drei isolierenden Armen (9, 10, 11) gehalten werden, die fest miteinander verbunden sind, dadurch gekennzeichnet, daß sie eine magnetische Abschirmung (2) umfaßt, die aus einem zylindrischen Mantel aus Aluminium besteht, im Inneren des Mantels aus Stahl angeordnet ist und sich sehr nahe bei diesem letzteren befindet, wobei die Leiter im Inneren der in die Arme gebohrten Öffnungen frei gleiten können, wobei der Mantel (2) aus Aluminium durch Streifen (22) aus Kunststoffmaterial oder füllstoffhaltigem Polymer mit niedrigem Reibungskoeffizienten vom Mantel (1) aus Stahl getrennt ist.

2. Elektrische Leitung nach Anspruch 1, dadurch gekennzeichnet, daß das Material der Streifen (22) das Polytetrafluorethylen ist, das im Handel unter dem Zeichen "Téflon" bekannt ist.

3. Elektrische Leitung nach einem der Ansprüche 1 und 2, dadurch gekennzeichnet, daß die Enden der Arme (9, 10, 11) paarweise durch die Enden von Metallbögen (19, 20, 21) eingespannt sind, wobei diese Enden verschraubt sind.

4. Elektrische Leitung nach Anspruch 3, dadurch gekennzeichnet, daß die Enden der Bögen (19, 20, 21) ein von unten nach oben und horizontal umgekehrtes, gleichseitiges Dreieck bilden.

5. Elektrische Leitung nach einem der Ansprüche 1 bis 4, dadurch gekennzeichnet, daß der Stahlmantel aus Mantelelementen (1, 1') besteht, die eine Länge zwischen 5 und 12 m haben und paarweise verschweißt sind.

6. Elektrische Leitung nach einem der Ansprüche 1 bis 5, dadurch gekennzeichnet, daß der Aluminiummantel aus Mantelelementen (2, 2') besteht, die jeweils mit den Haltebögen (19, 20, 21) desselben Armaufbaus verschweißt sind.

7. Elektrische Leitung nach einem der Ansprüche 1 bis 6, dadurch gekennzeichnet, daß die Leiter aus Leiterelementen (3, 3'; 4, 4') bestehen, die paarweise verschweißt sind.

8. Elektrische Leitung nach Anspruch 7, dadurch gekennzeichnet, daß die Arme (9) mit einer Einlage (25) versehen sind, die mit einer Auskehlung (32) versehen ist, die zwei Flächen für die Anlage an zwei benachbarten Leitern (3, 3') begrenzt, wobei sich die Schweißstelle (33) der Leiter (3, 3') im Inneren der Auskehlung (32) befindet.

9. Elektrische Leitung nach Anspruch 8, dadurch gekennzeichnet, daß die Metalleinlage (25) der isolierenden Arme (9, 10, 11) mit Dichtungen (29, 30) beiderseits der Auskehlung (32) und einem elektrischen Kontakt (31) versehen ist.

10. Elektrische Leitung nach Anspruch 8, dadurch gekennzeichnet, daß die Bögen (19, 20, 21) sich nahe der Schweißstelle der Mäntel (1, 1') aus Stahl befinden.

11. Elektrische leitung nach einem der Ansprüche 1 bis 9, dadurch gekennzeichnet, daß sie in in einer Fertigungsanlage montierte Abteilungen ausgeführt ist, wobei jede Abteilung ein Mantelelement (1) aus Stahl mit einer Länge zwischen 5 und 12 m, ein Mantelelement (2) aus Aluminium mit einer Länge gleich dem Stahlmantel, drei Leiterlemente (3, 4, 5) mit einer Länge gleich der der Mäntel und einen Aufbau aus Stützarmen (9, 10, 11) und Bögen (19, 20, 21) umfaßt, mit denen ein Ende des Mantels aus Aluminium fest verbunden ist.

12. Elektrische Leitung nach Anspruch 11, dadurch gekennzeichnet, daß zur Bildung eines Stücks mehrere Abteilungen fest verbunden sind, wobei das Ende des Stücks mit Mitteln für das Auffüllen und das Entleeren des Gases, Dichtungsmitteln für das Stück, Mitteln zum Sicherstellen der freien Ausdehnung der Leiter und der Mäntel und Mitteln für die Demontage zweier benachbarter Stücke versehen ist.

## Claims

1. A gas-insulated high-tension three-phase electricity line comprising a cylindrical steel case (1) and three conductors (3, 4, 5) disposed parallel to the axis of said case, the conductors (3, 4, 5) being held by a plurality of sets of three insulating arms (9, 10, 11) secured to one another, the line being characterized in that it comprises a magnetic screen (2) constituted by a cylindrical aluminium case placed inside said steel case and situated very close thereto, said conductors being free to slide through openings formed in said arms, the aluminum case (2) being separated from the steel case (1) by strips (22) of plastics material or of filled polymer having a low coefficient of friction.

2. An electricity line according to claim 1, characterized in that the material of said strips (22) is polytetrafluoroethylene, known commercially under the trademark "Teflon".

3. An electricity line according to claim 1 or 2, characterized in that the ends of said arms (9, 10, 11) are clamped in pairs between the bolted-together ends of metal hoops (19, 20, 21).

4. An electricity line according to claim 3, characterized in that the ends of the hoops (19, 20, 21) form an upside-down equilateral triangle having a horizontal base on top.

5. An electricity line according to any one of claims 1 to 4, characterized in that the steel case is made up of case elements (1, 1') of a length lying in the range 5 meters to 12 meters, which elements are welded together end to end.

6. An electricity line according to any one of claims 1 to 5, characterized in that the aluminum case is made up of case elements (2, 2') each of which is welded to the supporting hoops (19, 20, 21) of a single set of arms.

7. An electricity line according to any one of claims 1 to 6, characterized in that the conductors are constituted by conductor elements (3, 3'; 4, 4') that are welded together end to end.

8. An electricity line according to claim 7, characterized in that the arms (9) are provided with respective sleeves (25) each provided with its own groove (32) to define two bearing surfaces that bear against two adjacent conductors (3, 3'), the weld (33) between two conductors (3, 3') being located inside said groove (32).

9. An electricity line according to claim 8, characterized in that each metal sleeve (25) of the insulating arms (9, 10, 11) is provided with an electrical contact (31) and with gaskets (29, 30) on either side of its groove (32).

10. An electricity line according to claim 8, characterized in that the hoops (19, 20, 21) are located close to the weld between the steel cases (1, 1').

11. An electricity line according to any one of claims 1 to 9, characterized in that it is made up of factory-assembled compartments, each compartment comprising a steel case element (1) of length lying in the range 5 meters to 12 meters, an aluminum case element (2) of equal length to the steel case, three conductor elements (3, 4, 5) of equal length to said cases, and a set of support arms (9, 10, 11) and of hoops (19, 20, 21), which set is secured to one end of said aluminum case.

12. An electricity line according to claim 11, characterized in that a plurality of compartments are connected together to form a length of line, the end of the length of line being provided with means for injecting and for purging gas, with means for sealing the length of line, with means for allowing the conductors and the cases to expand freely, and with means enabling two adjacent lengths of line to be disassembled.
